# EUROPÄISCHE PATENTSCHRIFT

(11) **EP 4 572 977 B1**
(45) Veröffentlichungstag und Bekanntmachung des Hinweises auf die Patenterteilung: **01.07.2026**
(21) Anmeldenummer: 23757878.6
(22) Anmeldetag: 11.08.2023
(51) Int. Cl.: B60L 53/36, B60L 53/126, B60L 53/38, B60L 53/67, G05D 1/20, H04B 5/00, B60L 53/30, B60L 53/39, H04B 5/79, B60L 53/66, B60L 53/68, G08G 1/14, H04B 5/26

(54) **LADESYSTEM MIT INDUKTIONSLADEVORRICHTUNGEN**
CHARGING SYSTEM COMPRISING INDUCTIVE CHARGE DEVICES
SYSTÈME DE CHARGE COMPRENANT DES DISPOSITIFS DE CHARGE INDUCTIF

(30) Priorität: 16.08.2022 DE 102022120700; 28.09.2022 DE 102022210295
(43) Veröffentlichungstag der Anmeldung: 25.06.2025
(60) Teilanmeldung: 26177095.2
(73) Patentinhaber: MAHLE International GmbH, 70376 Stuttgart (DE)
(72) Erfinder: BÖTTIGHEIMER, Dr. Mike, 70806 Kornwestheim (DE)
(86) Internationale Anmeldenummer: PCT/EP2023/072338
(87) Internationale Veröffentlichungsnummer: WO 2024/037992

(56) Entgegenhaltungen:
- DE-B3- 102018 204 986
- US-A1- 2014 035 526
- US-A1- 2015 217 650
- US-A1- 2021 380 003
- US-B2- 10 343 540

## Beschreibung

Die vorliegende Erfindung betrifft ein Ladesystem mit stationären Induktionsladevorrichtungen zur drahtlosen Energieübertragung mit Kraftfahrzeugen. Die Erfindung betrifft ferner ein Parkplatz-System mit einem Parkplatz und einem solchen Ladesystem.

Die drahtlose Energieübertragung mit einem Kraftfahrzeug kann induktiv erfolgen. Zu diesem Zweck wirkt eine mobile Induktionsladevorrichtung des Kraftfahrzeugs mit einer stationären Induktionsladevorrichtung zusammen. Die jeweilige Induktionsladevorrichtung weist eine Energiespule auf, wobei zur Energieübertragung eine der Energiespulen als Primärspule und die andere Energiespule als Sekundärspule fungiert. Um eine derartige Energieübertragung zu ermöglichen und den Wirkungsgrad der Energieübertragung zu erhöhen, sind die Energiespulen und somit die mobile Induktionsladevorrichtung zur stationären Induktionsladevorrichtung entsprechend zu positionieren.

Ein Ladesystem kann mehrere solche stationäre Induktionsladevorrichtungen aufweisen, sodass die jeweilige stationäre Induktionsladevorrichtung mit einer mobilen Induktionsladevorrichtung eines Kraftfahrzeugs drahtlos Energie übertragen kann.

Ein solches Ladesystem ist beispielsweise aus der DE 10 2018 204 986 B3 bekannt.

Die US 10,343,450 B2 und die US 2014/0035526 A1 beschreiben Systeme zur drahtlosen Energieübertragung mit einer mobilen Induktionsladevorrichtung und einer stationären Induktionsladevorrichtung.

Die vorliegende Erfindung beschäftigt sich mit der Aufgabe, für ein Ladesystem der eingangs beschriebenen Art sowie für ein ein solches Ladesystem umfassendes Parkplatz-System verbesserte oder zumindest andere Ausführungsformen anzugeben, welche insbesondere Nachteile aus dem Stand der Technik beseitigen. Insbesondere beschäftigt sich die vorliegende Erfindung mit der Aufgabe, für das Ladesystem sowie für das Parkplatz-System verbesserte oder zumindest alternative Ausführungsformen anzugeben, welche sich durch eine verbesserte Effizienz bei zugleich verbessertem Betrieb und erhöhtem Komfort auszeichnen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht demnach auf dem allgemeinen Gedanken, in einem Ladesystem mit stationären Induktionsladevorrichtungen zur drahtlosen Energieübertragung mit einer mobilen Induktionsladevorrichtung eines Kraftfahrzeugs, die jeweilige stationäre Induktionsladevorrichtung mit einer Positioniereinrichtung auszustatten, welche im aktiven Zustand zumindest ein Positioniersignal zum Positionieren der mobilen Induktionsladevorrichtung zur stationären Induktionsladevorrichtung erzeugt. Auf diese Weise kann die mobile Induktionsladevorrichtung und somit das zugehörige Kraftfahrzeug auf gewünschte Weise und mit erhöhter Präzision zur jeweiligen stationären Induktionsladevorrichtung positioniert werden. Dies ermöglicht auf einfache Weise eine ausreichend hohe Kopplung zwischen der stationären Induktionsladevorrichtung und der mobilen Induktionsladevorrichtung, sodass eine Energieübertragung erfolgt, und führt zudem zu einer verbesserten Energieübertragung zwischen der jeweiligen stationären Induktionsladevorrichtung mit der zu dieser positionierten mobilen Induktionsladevorrichtung. Daraus resultiert eine erhöhte Effizienz des Ladesystems. Zugleich beruht die vorliegende Erfindung auf dem allgemeinen Gedanken, die stationären Induktionsladevorrichtungen in Gruppen zu unterteilen und die Positioniereinrichtungen der jeweiligen Gruppe jeweils zumindest teilweise zu deaktivieren und erst dann zu aktivieren, wenn sich ein Kraftfahrzeug der Gruppe annähert. Dies hat zur Folge, dass die stationären Induktionsladevorrichtungen der jeweiligen Gruppe erst dann vollständig betrieben werden, insbesondere erst dann das Positioniersignal komplett erzeugen, wenn eine Energieübertragung mit der mobilen Induktionsladevorrichtung eines Kraftfahrzeugs wahrscheinlich scheint oder die Möglichkeit überhaupt besteht. Somit ist der Energieverbrauch des Ladesystems reduziert. Dies führt wiederum zu einer erhöhten Effizienz des Ladesystems. Zugleich wird durch die Aktivierung der Positioniereinrichtungen der jeweiligen Gruppe einem Kraftfahrzeug eine Auswahl an möglichen verfügbaren stationären Induktionsladevorrichtungen geboten, zu welchen das Kraftfahrzeug mittels der jeweils zugehörigen Positioniereinrichtung positioniert werden kann. Dies führt zu einem verbesserten Betrieb und einem erhöhten Komfort.

Dem Erfindungsgedanken entsprechend umfasst das Ladesystem mehrere zueinander beabstandeten stationäre Induktionsladevorrichtungen. Die jeweilige stationäre Induktionsladevorrichtung wirkt in einem Ladebetrieb zur drahtlosen Energieübertragung mit einer mobilen Induktionsladevorrichtung eines Kraftfahrzeugs induktiv zusammen. Die stationären Induktionsladevorrichtungen sind in zumindest zwei Gruppen unterteilt, wobei die jeweilige Gruppe zumindest zwei stationäre Induktionsladevorrichtungen umfasst. Die jeweilige stationäre Induktionsladevorrichtung weist eine Positioniereinrichtung auf, welche in einem Positionierbetrieb zum Positionieren einer mobilen Induktionsladevorrichtung eines Kraftfahrzeugs zur stationären Induktionsladevorrichtung ein Positioniersignal erzeugt. Die jeweilige Induktionsladevorrichtung weist eine Schnittstelle zum Aktivieren und Deaktivieren der Positioniereinrichtung auf, welche nachfolgend auch als Aktivier-Schnittstelle bezeichnet wird. Die jeweilige Gruppe weist ferner eine Einrichtung auf, welche eine Annäherung eines Kraftfahrzeugs an die Gruppe erkennt und nachfolgend auch als Triggereinrichtung bezeichnet wird. Die jeweilige Triggereinrichtung ist also derart ausgestaltet, dass sie die Annäherung eines Kraftfahrzeugs an die zugehörige Gruppe erkennt. Die jeweilige Triggereinrichtung ist mit den Aktivier-Schnittstellen der stationären Induktionsladevorrichtungen der zugehörigen Gruppe kommunizierend verbunden. Dabei aktiviert die jeweilige Triggereinrichtung bei der Erkennung der Annäherung eines Kraftfahrzeugs an die zugehörige Gruppe die Positioniereinrichtungen zumindest der unbelegten stationären Induktionsladevorrichtungen der zugehörigen Gruppe mittels den Aktivier-Schnittstellen zumindest jeweils teilweise. Entsprechend ist die jeweilige Triggereinrichtung ausgestaltet.

Die Positioniereinrichtungen sind, wie erläutert, zumindest teilweise deaktiviert und werden erst dann aktiviert, wenn sich ein Kraftfahrzeug der zugehörigen Gruppe annähert. Das heißt, dass zweckmäßig jede der Positioniereinrichtungen zumindest teilweise deaktiviert ist und erst dann aktiviert wird, wenn sich ein Kraftfahrzeug der zugehörigen Gruppe annähert.

Unter "jeweilig" ist vorliegend insbesondere "jedes einzelne" zu verstehen. "Die jeweilige Positioniereinrichtung einer Gruppe" bedeutet somit "jede einzelne Positioniereinrichtung der Gruppe".

Die teilweise Aktivierung der jeweiligen Positioniereinrichtung bedeutet, dass die Positioniereinrichtung im Übrigen, also im deaktivierten Zustand entsprechend zumindest teilweise deaktiviert ist.

Die jeweils teilweise Aktivierung der Positioniereinrichtungen einer Gruppe abhängig von der Annäherung eines Kraftfahrzeugs zu dieser Gruppe bedeutet, dass sich die Positioniereinrichtungen der übrigen Gruppen im deaktivierten Zustand befinden, insbesondere sofern sich kein Kraftfahrzeug diesen übrigen Gruppen annähert.

Die jeweilige Positioniereinrichtung kann durch die Aktivierung mittels der Triggereinrichtung komplett aktiviert werden. Dies ist insbesondere dann der Fall, wenn die Positioniereinrichtung im deaktivierten Zustand komplett deaktiviert, also ausgeschaltet, ist.

Die teilweise Aktivierung der Positioniereinrichtung erfolgt zweckmäßig dann, wenn die Positioniereinrichtung im deaktivierten Zustand lediglich teilweise deaktiviert ist. Im deaktivierten Zustand kann sich die Positioniereinrichtung also beispielsweise in einem Stand-by-Zustand befinden, in welchem die Positioniereinrichtung das Positioniersignal zumindest teilweise erzeugt. Vorstellbar ist es insbesondere, dass die Positioniereinrichtung im Stand-by-Zustand ein Positioniersignal zur Fernpositionierung oder Grobpositionierung eines Kraftfahrzeugs erzeugt.

Nachfolgend ist unter "aktivieren" und "Aktivierung" eine vorzugsweise vollständige Aktivierung der Positioniereinrichtung zu verstehen, sodass die Positioniereinrichtung das Positioniersignal vollständig erzeugt.

Nachfolgend ist unter "deaktivieren" und "Deaktivierung" eine zumindest teilweise Deaktivierung der Positioniereinrichtung zu verstehen, sodass die Positioniereinrichtung entweder gänzlich ausgeschaltet ist oder sich im Stand-by-Zustand befindet.

Die erfindungsgemäße Ausgestaltung ist vorteilhaft, da sich, solange sich kein Kraftfahrzeug dem Ladesystem nähert, alle Positionierungseinrichtungen in einem verhältnismäßig energiesparenden deaktivierten Zustand befinden können und sich, sobald sich ein Kraftfahrzeug einer Gruppe des Ladesystems nähert nur die Positioniereinrichtungen dieser Gruppe aktiviert werden und alle übrigen Positioniereinrichtungen in einem verhältnismäßig energiesparenden deaktivierten Zustand verbleiben können.

Die jeweilige stationäre Induktionsladevorrichtung ist vorteilhaft im Betrieb zur drahtlosen Energieübertragung mit einem einzigen Kraftfahrzeug, insbesondere mit einer einzigen mobilen Induktionsladevorrichtung, ausgebildet. Das heißt insbesondere, dass die jeweilige stationäre Induktionsladevorrichtung vorteilhaft einen Ladepunkt des Ladesystems bildet.

Unter Annäherung an eine Gruppe ist vorliegend insbesondere zu verstehen, dass ein Abstand eines Kraftfahrzeugs zur Gruppe einen vorgegebenen Wert unterschreitet.

Eine unbelegte stationäre Induktionsladevorrichtung ist insbesondere eine solche stationäre Induktionsladevorrichtung, welche sich nicht im Ladebetrieb und/oder im Positionierbetrieb befindet. Das heißt, dass diejenigen stationären Induktionsladevorrichtungen unbelegt sind, welche zur drahtlosen Energieübertragung mit einem Kraftfahrzeug verfügbar sind.

Bevorzugt sind Ausführungsformen, bei denen zumindest eine der Triggereinrichtungen, vorzugsweise die jeweilige Triggereinrichtung, bei Erkennung der Annäherung eines Kraftfahrzeugs lediglich die Positioniereinrichtungen der unbelegten stationären Induktionsladevorrichtungen aktiviert. Somit kommt es zu einem weiter reduzierten Energieverbrauch des Ladesystems und folglich zu einer weiter erhöhten Effizienz. Ferner werden auf diese Weise weniger Überlappungen der Positionierfelder erzielt und dem Kraftfahrzeug lediglich tatsächlich verfügbare stationäre Induktionsladevorrichtungen angeboten. Dies führt zu einem verbesserten Betrieb.

Das Ladesystem kommt vorteilhaft in einem Parkplatz-System zum Einsatz, welches ferner einen Parkplatz umfasst. Der Parkplatz umfasst mehrere Parkflächen, wobei zumindest ein Teil der Parkflächen mit einer zugehörigen stationären Induktionsladevorrichtung des Ladesystems versehen sind. Das heißt, dass die jeweilige stationäre Induktionsladevorrichtung an einer zugehörigen Parkfläche angeordnet ist. Somit kommt es zu einer entsprechenden Gruppierung der Parkflächen.

Die jeweilige Parkfläche ist vorteilhaft für ein einziges Kraftfahrzeug vorgesehen.

Zumindest eine der stationären Induktionsladevorrichtungen kann auf der zugehörigen Parkfläche angeordnet sein.

Zumindest eine der stationären Induktionsladevorrichtungen kann zumindest teilweise in der zugehörigen Parkfläche eingelassen sein. Insbesondere kann zumindest eine der stationären Induktionsladevorrichtungen gänzlich in der zugehörigen Parkfläche eingelassen.

Die jeweilige Induktionsladevorrichtung weist eine Spule zur Energieübertragung auf, welche nachfolgend auch als Energiespule bezeichnet wird. Das heißt, dass die jeweilige stationäre Induktionsladevorrichtung und die jeweilige mobile Induktionsladevorrichtung eine Energiespule aufweist. Zur drahtlosen Energieübertragung dient die Energiespule der stationären Induktionsladevorrichtung als Primärspule und die Energiespule der zur stationären Induktionsladevorrichtung positionierten mobilen Induktionsladevorrichtung als Sekundärspule oder umgekehrt. Das heißt, dass unter Energieübertragung vorliegend auch eine bidirektionale drahtlose Energieübertragung zu verstehen ist.

Die Positionierung der mobilen Induktionsladevorrichtung zur stationären Induktionsladevorrichtung erfolgt zweckmäßig derart, dass die Energiespulen zueinander positioniert sind, um eine optimale induktive Kopplung zwischen den Energiespulen zu erreichen.

Zur Positionierung der mobilen Induktionsladevorrichtung empfängt das zugehörige Kraftfahrzeug das Positioniersignal, wobei anhand des Positioniersignals vorteilhaft eine Navigationsanweisung erzeugt und ausgegeben wird. Zum Empfangen des Positioniersignal kann das Kraftfahrzeug, insbesondere die mobile Induktionsladevorrichtung, zumindest einen entsprechenden Empfänger, beispielsweise zumindest eine Empfangsspule, aufweisen.

Zweckmäßig wird eine Positioniereinrichtung deaktiviert, wenn eine mobile Induktionsladevorrichtung zur zugehörigen stationären Induktionsladevorrichtung positioniert ist, insbesondere, wenn die zugehörige stationäre im Ladebetrieb ist.

Bevorzugt fängt der Ladebetrieb an, wenn die mobile Induktionsladevorrichtung zur stationären Induktionsladevorrichtung positioniert ist. Das heißt insbesondere, dass der Ladebetrieb nach dem Positionierbetrieb anfängt. Somit wird der Energieverbrauch reduziert und der Betrieb robuster.

Die jeweilige Navigationsanweisung kann einem Fahrzeugführer zur Verfügung gestellt werden, der das Kraftfahrzeug entsprechend der Navigationsanweisung fahren, insbesondre lenken, kann, um die Positionierung der Induktionsladevorrichtungen zueinander zu erreichen. Alternativ oder zusätzlich kann die jeweilige Navigationsanweisung an ein Fahrassistenzsystem zum zumindest teilweisen autonomen Fahren des Kraftfahrzeugs ausgegeben werden, sodass das Fahrassistenzsystem das Kraftfahrzeug mittels der Navigationsanweisung zur Positionierung der Induktionsladevorrichtungen zueinander zumindest teilautonom fährt.

Der Beginn der Positionierung, also das sogenannte "Pairing" zwischen Kraftfahrzeug und stationärer Induktionsladevorrichtung, erfolgt vorteilhaft beim Anfahren der entsprechenden stationären Induktionsladevorrichtung, insbesondere beim Anfahren der zugehörigen Parkfläche. Durch die Aktivierung der Positioniereinrichtungen der jeweiligen Gruppe wird dabei dem jeweiligen Kraftfahrzeug die Möglichkeit der Auswahl zwischen den verfügbaren, also unbelegten, stationären Induktionsladevorrichtungen, insbesondere Parkflächen, der jeweiligen Gruppe gegeben.

Beim Positioniersignal kann es sich um ein solches beliebiger Art handeln.

Insbesondere kann das Positioniersignal zumindest ein Feld umfassen. Das heißt, dass die Positioniereinrichtung zumindest ein Feld erzeugen kann.

Vorteilhaft handelt es sich bei zumindest einem der wenigstens einen Felder, bevorzugt beim jeweiligen Feld, um ein magnetisches Feld. Somit kommt es, insbesondere im Vergleich zu elektromagnetischen Feldern, zu einem vereinfachten und robusten Empfang des Positioniersignals am Kraftfahrzeug sodass die Positionierung zuverlässig und robust erfolgt.

Zum Erzeugen des jeweiligen magnetischen Felds kann die Positioniereinrichtung zumindest eine Spule umfassen, welche nachfolgend auch als Sendespule bezeichnet wird. Die jeweilige Sendespule ist vorteilhaft von der Energiespule der stationären Induktionsladevorrichtung unterschiedlich.

Bevorzugt erzeugt zumindest eine der Positioniereinrichtungen, vorteilhaft die jeweilige Positioniereinrichtung, zumindest zwei zueinander versetzte Felder, vorzugsweise zumindest zwei zueinander versetzte magnetische Felder, dessen Verhältnis zum Positionieren verwendet wird. Dies ermöglicht eine vereinfachte Positionierung, insbesondere ohne vorherige Kalibrierung.

Bevorzugt ist die jeweilige Triggereinrichtung ferner derart ausgestaltet ist, dass sie einen Abwesenheitszustand der zugehörigen Gruppe erkennt, in welchem sich kein Kraftfahrzeug in der Gruppe befindet oder sich alle in der Gruppe befindenden Kraftfahrzeuge im Ladebetrieb befinden und kein Kraftfahrzeug der Gruppe annähert, und die Positioniereinrichtungen der zugehörigen Gruppe mittels den Aktivier-Schnittstellen deaktiviert, wenn der Abwesenheitszustand erkannt wird.

Bevorzugt werden die Positioniereinrichtungen der zugehörigen Gruppe alternativ oder zusätzlich dann deaktiviert, wenn ein sich zuvor der Gruppe annäherndes Kraftfahrzeug innerhalb der Gruppe mit einer der zugehörigen stationären Induktionsladevorrichtungen zu positionieren beginnt und/oder Energie überträgt, das heißt insbesondere, wenn eine der stationären Induktionsladevorrichtungen der Gruppe mit der mobilen Induktionsladevorrichtung des Kraftfahrzeugs im Ladebetrieb ist.

Die jeweilige Triggereinrichtung kann zur Erkennung der Annäherung eines Kraftfahrzeugs beliebig ausgestaltet sein.

Vorstellbar ist es, dass zumindest eine der Triggereinrichtungen zur Erkennung der Annäherung eines Kraftfahrzeugs an die zugehörige Gruppe einen Bewegungsmelder und/oder eine Induktionsschleife im Boden bzw. in einer Fahrbahn und/oder eine optische Schranke und/oder eine Öffnungseinrichtung zum Öffnen eines Tors oder einer Schranke aufweist und/oder überwacht.

Als bevorzugt gelten Ausführungsformen, bei welchen zumindest eine der Triggereinrichtungen eine drahtlose Kommunikationsschnittstelle aufweist, welche eine die zugehörige Gruppe umfassende Zone mit einem drahtlosen Netz abdeckt und mittels des Netzes mit Kraftfahrzeugen kommuniziert. Dabei wird eine Annäherung eines Kraftfahrzeugs erkannt, wenn das Kraftfahrzeug mit der drahtlosen Kommunikationsschnittstelle kommuniziert. Eine Annäherung des Kraftfahrzeugs kann also erkannt werden, wenn das Kraftfahrzeug in die mit dem Netz abgedeckte Zone eintritt. Somit kommt es zu einer einfachen und zuverlässigen Erkennung der Annäherung eines Kraftfahrzeugs, ohne dass zu diesem Zweck bauliche Maßnahmen erforderlich sind. Insbesondere ist es zu diesem Zweck nicht notwendig, den Boden und/oder die Fahrbahn entsprechend baulich zu bearbeiten.

Zweckmäßig erkennt die Triggereinrichtung mittels des drahtlosen Netzes auch, ob sich ein Kraftfahrzeug in der zugehörigen Gruppe befindet bzw. sich von der Gruppe entfernt. Eine solche Erkennung, insbesondere die Erkennung des Abwesenheitszustands, erfolgt vorzugsweise, wenn kein Kraftfahrzeug mittels des drahtlosen Netzes mit der drahtlosen Kommunikationsschnittstelle kommuniziert.

Die drahtlose Kommunikationsschnittstelle erzeugt das drahtlose Netz und deckt mit dem Netz die Zone ab. Insbesondere entspricht die Zone dem mit dem Netz abgedeckten Bereich.

Das jeweilige Kraftfahrzeug weist zweckmäßig zur Kommunikation mit dem Netz eine entsprechende fahrzeugseitige Kommunikationsschnittstelle auf, welche nachfolgend auch als Drahtlos-Schnittstelle bezeichnet wird. Insbesondere ist das Kraftfahrzeug mittels der fahrzeugseitige Drahtlos-Schnittstelle in der Lage, Kommunikationssignale und zu empfangen auszugeben.

Bevorzugt sind Ausführungsformen, bei welchen zumindest zwei der Triggereinrichtungen, vorzugsweise die jeweilige Triggereinrichtung, eine solche drahtlose Kommunikationsschnittstelle aufweist. Dementsprechend umfasst das Ladesystem zumindest zwei solche Zonen, wobei die jeweilige Zone zumindest eine solche Gruppe, vorzugsweise eine einzige solche Gruppe, umfasst.

Bevorzugt sind Ausführungsformen, bei welchen zumindest eine der Triggereinrichtungen, vorzugsweise die jeweilige Triggereinrichtung, zur Erkennung der Annäherung eines Kraftfahrzeugs lediglich die drahtlose Kommunikationsschnittstelle und somit das mittels der drahtlosen Kommunikationsschnittstelle erzeugte Netz einsetzt.

Bei dem jeweiligen drahtlosen Netz kann es sich um ein solches beliebiger Art handeln.

Bei bevorzugten Ausführungsformen handelt es sich bei zumindest einem der wenigstens einen Netze, vorzugsweise beim jeweiligen Netz, um ein solches gemäß dem IEEE 802.11-Standard, also vorzugsweise um ein WLAN. Insbesondere ist die drahtlose Kommunikationsschnittstelle eine WLAN-Basisstation, beispielsweise ein WLAN-Accesspoint und/oder ein WLAN-Router. Somit kommt es neben einem großen abgedeckten Bereich und folglich einer großen Zone zur Nutzung bereits vorhandener/freigegebener Frequenzen für die drahtlose Kommunikationsschnittstelle und somit zur Erkennung der Annäherung eines Kraftfahrzeugs. In der Folge kann das Ladesystem mit weniger drahtlosen Schnittstellen betrieben werden und/oder benötigt keine besonderen Frequenzen zur Erkennung der Annäherung. Folglich ist das Ladesystem kostengünstig, einfach und zugleich zuverlässig. Ferner kommt es auf diese Weise zu einer Vermeidung oder zumindest Reduzierung von Wechselwirkungen des drahtlosen Netzes mit den mittels der Energiespulen und/oder Sendespulen erzeugten Felder. Auf diese Weise wird die Störanfälligkeit verringert und die Zuverlässigkeit des Ladesystems erhöht.

Ferner sind Kommunikationsschnittstellen gemäß dem IEEE 802.11-, Standardprodukte, beispielsweise in Form von entsprechenden Chips, und kostengünstig verfügbar, sodass das Ladesystem kompakt und kostengünstig umgesetzt ist.

Weisen zumindest zwei Triggereinrichtungen jeweils eine solche drahtlose Kommunikationsschnittstelle auf, ist in der jeweiligen Gruppe das Signal des drahtlosen Netzes der zugehörigen Triggereinrichtung stärker als das Signal des drahtlosen Netzes der jeweiligen anderen Triggereinrichtung. Entsprechend sind die drahtlosen Kommunikationsschnittstellen angeordnet und/oder ausgestaltet. Mit anderen Worten, zumindest ein Teil der stationären Induktionsladevorrichtungen der jeweiligen Gruppe, vorzugsweise alle stationären Induktionsladevorrichtungen der jeweiligen Gruppe, sind derjenigen Triggereinrichtung mit dem lokal stärksten drahtlosen Signal zugeordnet. Dies führt zu einer erhöhten Zuverlässigkeit des Ladesystems, insbesondere der Aktivierung und der Deaktivierung der stationären Induktionsladevorrichtungen.

Als vorteilhaft gelten Ausführungsformen, bei welchen zumindest eine der wenigstens einen drahtlosen Kommunikationsschnittstellen, vorzugsweise die jeweilige drahtlose Kommunikationsschnittstelle, mittig in der zugehörigen Gruppe angeordnet ist. Dies hat zur Folge, dass die zugehörige Gruppe zuverlässig mit dem drahtlosen Netz abgedeckt ist, sodass Annäherungen von Kraftfahrzeugen aus unterschiedlichen Richtungen zuverlässig und einfach erkannt werden. Zudem hat dies vorteilhaft zur Folge, dass die zugehörige Gruppe mittig in der zugehörigen Zone angeordnet ist. Dies hat wiederum zur Folge, dass Annäherungen von Kraftfahrzeugen aus unterschiedlichen Richtungen, insbesondere aus allen Richtungen, gleichmäßig, zuverlässig und einfach erkannt werden.

Zumindest eine der wenigstens einen drahtlosen Kommunikationsschnittstellen, insbesondere die WLAN-Basisstation, beispielsweise der WLAN-Accesspoint und/oder der WLAN-Router, kann von den zugehörigen stationären Induktionsladevorrichtungen separat, insbesondere zudem zu diesen beabstandet, sein. Das heißt es insbesondere, dass die drahtlose Kommunikationsschnittstelle ein separater Bestandteil in der zugehörigen Gruppe ist.

Vorstellbar ist es, dass zumindest eine der wenigstens einen drahtlosen Kommunikationsschnittstellen, insbesondere die WLAN-Basisstation, beispielsweise der WLAN-Accesspoint und/oder der WLAN-Router, in einer der zugehörigen stationären Induktionsladevorrichtungen vorgesehen ist. Da stationäre Induktionsladevorrichtungen in der Regel bereits über eine solche drahtlosen Kommunikationsschnittstellen, insbesondere nach dem IEEE 802.11-Standard verfügen, um beispielsweise mit der mobilen Induktionsladevorrichtung zu kommunizieren, wird zum Erzeugen des Netzes keine weiteren Bestandteile benötigt. Insbesondere ist die drahtlose Kommunikationsschnittstelle in einer der in der zugehörigen Gruppe mittig angeordneten stationären Induktionsladevorrichtung vorgesehen. Somit ist die drahtlose Kommunikationsschnittstelle also insbesondere integraler Bestandteil der zugehörigen stationären Induktionsladevorrichtung. Dies führt insbesondere zu einer vereinfachten Montage des Ladesystems, insbesondere im zugehörigen Parkplatz. Zudem können auf diese Weise die stationären Induktionsladevorrichtungen einer Gruppe modulartig nacheinander angeordnet werden, sodass jede Gruppe einem "Modul" entspricht.

Die jeweilige Aktivier-Schnittstelle kann beliebig ausgestaltet sein.

Vorstellbar ist es, dass zumindest eine der wenigstens einen Aktivier-Schnittstellen, insbesondere die jeweilige Aktivier-Schnittstelle, eine drahtlose Schnittstelle ist. Somit werden der Montageaufwand sowie die Anzahl der Komponenten des Landessystems reduziert.

Bevorzugt sind Ausführungsformen, bei welchen zumindest eine der wenigstens einen als drahtlose Schnittstelle ausgestalteten Aktivier-Schnittstellen mittels des drahtlosen Netzes mit der Triggereinrichtung kommunizierend verbunden sind. Somit erfolgt mittels des drahtlosen Netzes sowohl die Erkennung der Annäherung eines Kraftfahrzeugs als auch die Aktivierung und/oder Deaktivierung der entsprechenden Positioniereinrichtungen.

Prinzipiell können die jeweiligen Gruppen unterbrechungsfrei ineinander übergehen. Somit ist es insbesondere möglich, eine kontinuierliche Aktivierung und Deaktivierung der mobilen Induktionsladevorrichtungen benachbarter Gruppen durchzuführen.

Vorteilhaft ist zwischen zumindest zwei benachbarten Gruppen ein von stationären Induktionsladevorrichtungen freier Bereich, beispielsweise eine Fahrbahn des zugehörigen Parkplatzes, vorgesehen. Somit kommt es zu einer klaren Trennung der Gruppen, die eine entsprechend klare Trennung der Aktivierung und der Deaktivierung der der Gruppen jeweils zugehörigen Positioniereinrichtungen zur Folge hat. Auf diese Weise kommt es zu einem verbesserten Betrieb und einem reduzierten Energieverbrauch des Ladesystems. Letzteres führt zu einer erhöhten Effizienz.

Prinzipiell kann zumindest eine stationäre Induktionsladevorrichtung im Übergangsbereich zwischen zwei Gruppen beiden Gruppen zugeordnet sein, wobei jede Gruppe zumindest eine andere stationäre Induktionsladevorrichtung umfasst, welche der zweiten Gruppe nicht zugeordnet ist. Die Zugehörigkeit zumindest einer stationären Induktionsladevorrichtung zu zwei Gruppen ermöglicht insbesondere eine kontinuierliche Aktivierung und Deaktivierung der Positioniereinrichtungen der stationären Induktionsladevorrichtungen der beiden Gruppen.

Bevorzugt ist die jeweilige stationäre Induktionsladevorrichtung einer einzigen Gruppe zugeordnet. Somit kommt es zu einer klaren Trennung der Gruppen, die eine entsprechend klare Trennung der Aktivierung und Deaktivierung der der Gruppen jeweils zugehörigen Positioniereinrichtungen zur Folge hat. Auf diese Weise kommt es zu einem verbesserten Betrieb und einem reduzierten Energieverbrauch des Ladesystems, sodass auch eine erhöhte Effizienz erreicht ist.

Vorstellbar ist es, dass zumindest eine der stationären Induktionsladevorrichtungen ein BUS-System mit der Aktivier-Schnittstelle aufweist.

Alternative oder zusätzlich kann zumindest eine der stationären Induktionsladevorrichtungen ein Pin-System mit der Aktivier-Schnittstelle aufweisen.

Die Aktivier-Schnittstelle ist vorteilhaft bei der Elektronik einer bestimmten stationären Induktionsladevorrichtung angeordnet. Hierüber kann die kommunizierende Verbindung mit der zugehörigen Triggereinrichtung erfolgen. Hierüber können insbesondere die Signale empfangen werden, ob die Positioniereinrichtung aktiviert und/oder deaktiviert werden soll.

Die zu einer stationären Induktionsladevorrichtung gehörende Elektronik ist dabei nicht zwangsläufig bei dieser angeordnet, sondern kann auch entfernt von dieser, beispielsweise in einer sogenannten "Wallbox", angeordnet sein. Die kommunizierende Verbindung mit der zugehörigen Positioniereinrichtung kann also über die entfernt angeordnete Elektronik, insbesondere über die Wallbox, erfolgen.

Es versteht sich, dass neben dem Ladesystem auch ein Parkplatz-System mit einem Parkplatz und dem Ladesystem zum Umfang dieser Erfindung gehört.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine stark vereinfachte Draufsicht auf ein Ladesystem mit stationären Induktionsladevorrichtungen in einem Parkplatz-System
- Fig. 2: eine stark vereinfachte, schaltplanartige Darstellung einer stationären Induktionsladevorrichtung in einem Ladebetrieb,
- Fig. 3: einen vereinfachten Schnitt durch die stationäre Induktionsladevorrichtung,
- Fig. 4: eine stark vereinfachte, schaltplanartige Darstellung einer Gruppe des Ladesystems.

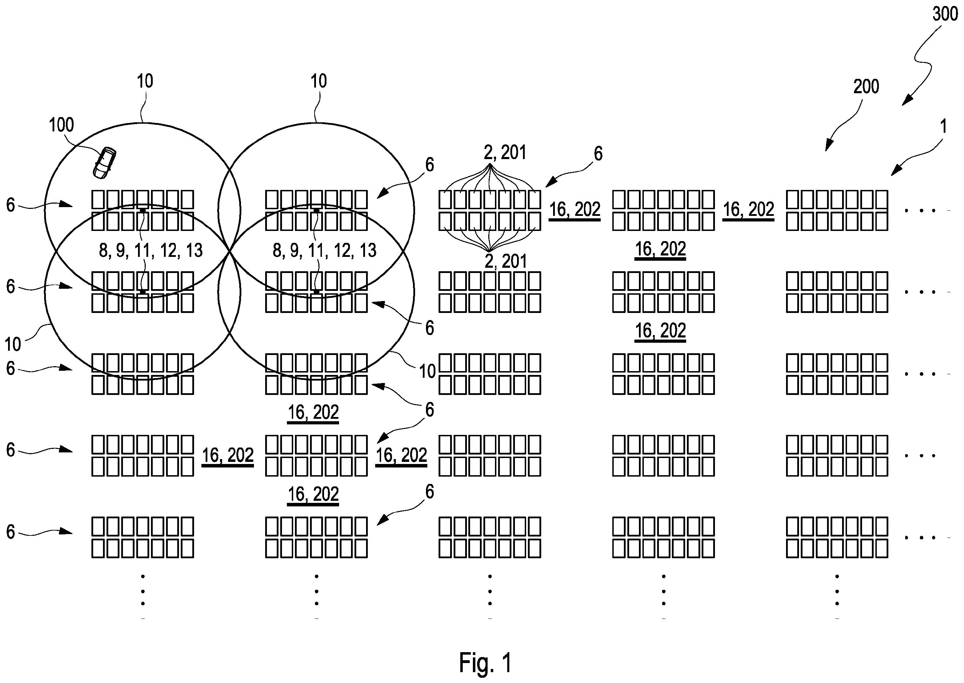

Ein Ladesystem 1, wie es beispielhaft in den Figuren 1, 2 und 4 gezeigt ist, kommt zur drahtlosen Energieübertragung mittels Induktion zum Einsatz. Zu diesem Zweck weist das Ladesystem 1 mehreren zueinander beabstandeten stationäre Induktionsladevorrichtungen 2 auf.

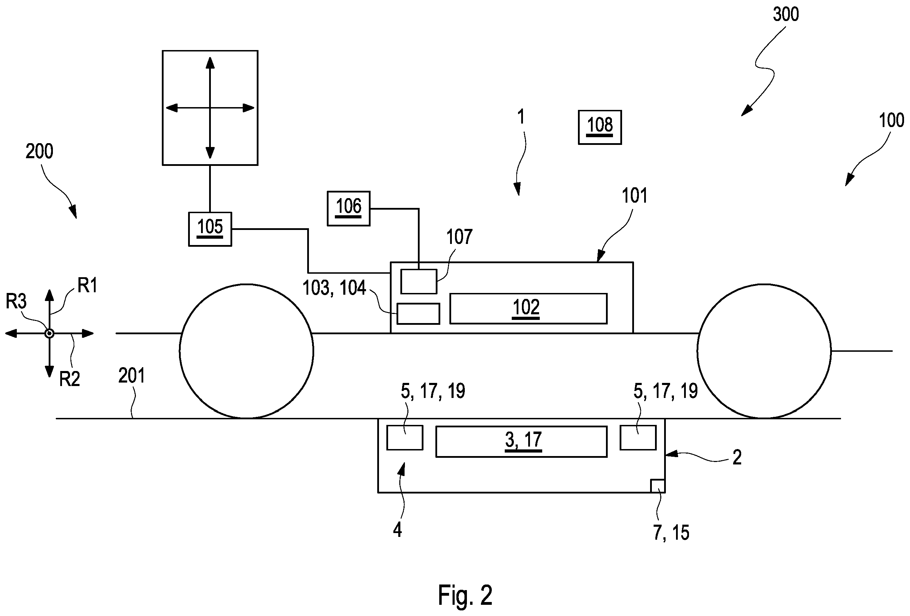

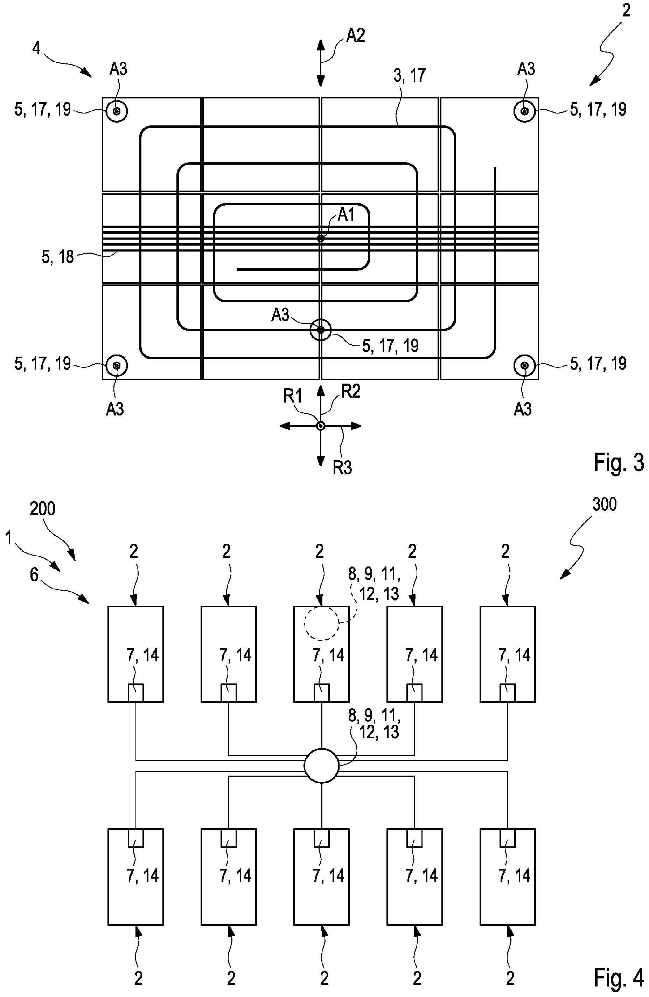

Wie Figur 2 entnommen werden kann, kommt die jeweilige stationäre Induktionsladevorrichtung 2 in einem Ladebetrieb zur drahtlosen Energieübertragung mit einem Kraftfahrzeug 100 zum Einsatz. Im Ladebetrieb ist die jeweilige stationäre Induktionsladevorrichtung 2 somit ein Ladepunkt des Ladesystems 1. Zu diesem Zweck weist das Kraftfahrzeug 100 eine mobile Induktionsladevorrichtung 101 auf. Im Ladebetrieb wirken die stationäre Induktionsladevorrichtung 2 und die mobile Induktionsladevorrichtung 101 zur drahtlosen Energieübertragung induktiv zusammen. Zur drahtlosen Energieübertragung weist die jeweilige stationäre Induktionsladevorrichtung 2 eine Spule 3 auf, welche nachfolgend auch als stationäre Energiespulen 3 bezeichnet wird. Die mobile Induktionsladevorrichtung 101 weist zu diesem Zweck eine mit der stationären Energiespule 3 induktiv zusammenwirkende Spule 102 auf, welche nachfolgend auch als mobile Energiespule 102 bezeichnet wird. Wie Figur 2 entnommen werden kann, sind die Energiespulen 3, 102 für die drahtlose Energieübertragung derart zueinander zu positionieren, dass sie induktiv koppeln. Für eine erhöhte Kopplung zwischen den Energiespulen 3, 102 und somit für einen erhöhten Wirkungsgrad sind die Energiespulen 3, 102 optimal zueinander zu positionieren, sodass eine optimale Kopplung erreicht wird. Für die Funktion und die Erhöhung des Wirkungsgrads ist also die mobile Induktionsladevorrichtung 101 und somit das Kraftfahrzeug 100 entsprechend relativ zur stationären Induktionsladevorrichtung 2 zu positionieren. Dabei sind die Induktionsladevorrichtungen 2, 101 in einer Höhenrichtung R1 zueinander beabstandet. Zudem sind, um den Ladebetrieb zu ermöglichen und im Ladebetrieb hohe Wirkungsgrade zu erzielen, die Energiespulen 3, 102 relativ zueinander quer zur Höhenrichtung R1, also in einer quer zur Höhenrichtung R1 verlaufenden Längsrichtung R2 und in einer quer zur Höhenrichtung R1 und quer zur Längsrichtung R2 verlaufenden Querrichtung R3, positioniert. Zum Positionieren weist die jeweilige stationäre Induktionsladevorrichtung 2, wie lediglich in den Figuren 2 und 3 gezeigt, eine Positioniereinrichtung 4 auf, welche in einem Positionierbetrieb zum Positionieren der mobilen Induktionsladevorrichtung 102 und somit des Kraftfahrzeugs 100 zur stationären Induktionsladevorrichtung 2 ein Positioniersignal erzeugt. In den gezeigten Ausführungsbeispielen erzeugt die jeweilige Positioniereinrichtung 4 ein magnetisches Positioniersignal mit zumindest einem magnetischen Feld. Zu diesem Zweck weist die Positioniereinrichtung 4 zumindest eine Spule 5 auf, welche nachfolgend auch als Sendespule 5 bezeichnet wird. Zudem weist das Kraftfahrzeug 100, in den gezeigten Ausführungsbeispielen die mobile Induktionsladevorrichtung 101, einen Empfänger 103 zum Empfangen des Positioniersignals auf. In dem in Figur 2 gezeigten Ausführungsbeispiel ist der Empfänger 103 eine Spule 104, welche nachfolgend auch als Empfangsspule 104 bezeichnet wird. Dabei wird mittels des empfangenen Positioniersignals eine Navigationsanweisung erzeugt, welche in Figur 2 mit gekreuzten Pfeilen angedeutet ist. Mit der Navigationsanweisung erfolgt also ein Fahren, insbesondere eine Lenkung, des Kraftfahrzeugs 100 zur Positionierung der Induktionsladevorrichtungen 2, 101 zueinander. Dabei kann die Auswertung des Positioniersignal und die Erzeugung und Ausgabe der Navigationsanweisung mittels einer Steuereinrichtung 105 des Kraftfahrzeugs 100 erfolgen. Bei der Energieübertragung kann insbesondere Energie auf die mobile Induktionsladevorrichtung 101 übertragen werden, um eine Batterie 106 des Kraftfahrzeugs 100 zu laden. Zu diesem Zweck kann zwischen der mobilen Energiespule 102 und der Batterie 106 ein Gleichrichter 107 vorgesehen sein, welche die in der mobilen Energiespule 102 induzierte Spannung in eine gleichgerichtete Spannung umwandelt. Die Energieübertragung kann auch von der mobilen Induktionsladevorrichtung 101 auf die stationäre Induktionsladevorrichtung 2 erfolgen.

Wie in Figur 1 zu sehen ist, sind die stationären Induktionsladevorrichtungen 2 in zumindest zwei Gruppen 6 unterteilt, wobei die jeweilige Gruppe 6 zumindest zwei stationäre Induktionsladevorrichtungen 2 umfasst. Figur 4 zeigt eine der Gruppen 6. In den Figur 1 umfasst die jeweilige Gruppe 6 rein beispielhaft vierzehn stationäre Induktionsladevorrichtungen 2. In Figur 4 umfasst die gezeigte Gruppe 6 rein beispielhaft zehn stationäre Induktionsladevorrichtungen 2.

Wie insbesondere Figur 4 ferner entnommen werden kann, weist die jeweilige stationäre Induktionsladevorrichtung eine Schnittstelle 7 auf, mittels welcher sich die Positioniereinrichtung 4 aktivieren und deaktivieren lässt. Die Schnittstelle 7 wird nachfolgend auch als Aktivier-Schnittstelle 7 bezeichnet. Wie den Figuren 1 und 4 zu entnehmen ist, weist das Ladesystem 1 für die jeweilige Gruppe 6 eine zugehörige Einrichtung 8 auf, welche derart ausgestaltet ist, dass sie eine Annäherung eines Kraftfahrzeugs 100 an die zugehörige Gruppe 6 erkennt. Die Einrichtung 8 wird nachfolgend auch als Triggereinrichtung 8 bezeichnet. Die jeweilige Triggereinrichtung 8 ist, wie in Figur 4 angedeutet, kommunizierend mit den Aktivier-Schnittstellen 7 der stationären Induktionsladevorrichtungen 2 der zugehörigen Gruppe 6 verbunden. Dabei aktiviert die Triggereinrichtung 8 die Positioniereinrichtungen 4 zumindest der unbelegten stationären Induktionsladevorrichtungen 2, vorzugsweise lediglich der unbelegten stationären Induktionsladevorrichtungen 2, der zugehörigen Gruppe 6, mittels den Aktivier-Schnittstellen 7, wenn sie die Annäherung einen Kraftfahrzeugs 100 an die zugehörige Gruppe 6 erkennt. Entsprechend ist die Triggereinrichtung 8 ausgestaltet. Somit sind die Positioniereinrichtungen 4 nicht permanent aktiv. In der Folge wird der Energieverbrauch des Ladesystems 1 reduziert und somit die Effizienz des Ladesystems 1 erhöht. Zugleich erfolgt mit der Positioniereinrichtung 4 eine einfache und zuverlässige Positionierung der Induktionsladevorrichtungen 2, 102 zueinander, wobei dem jeweiligen Kraftfahrzeug 100 die jeweilige unbelegte stationäre Induktionsladevorrichtung 2 der Gruppe 6 angeboten wird und zur Verfügung steht. Das heißt, dass das Kraftfahrzeug 100 jede der unbelegten stationären Induktionsladevorrichtungen 2 zur Positionierung mit der stationären Induktionsladevorrichtung 2 anfahren kann, wobei dem Kraftfahrzeug 100 mittels der Positioniereinrichtung 4 eine vereinfachte und präzise Positionierung ermöglicht wird.

In Figur 1 sind der besseren Übersicht halber lediglich für vier der Gruppen 6 eine zugehörige Triggereinrichtung 8 gezeigt.

Die jeweilige Triggereinrichtung 8 ist ferner derart ausgestaltet, dass sie einen Abwesenheitszustand der zugehörigen Gruppe 6 erkennt, in welchem sich kein Kraftfahrzeug 100 in der Gruppe 6 befindet oder sich alle in der Gruppe befindende Kraftfahrzeug 100 im Ladebetrieb befinden und kein Kraftfahrzeug 100 der Gruppe 6 annähert, wobei die Triggereinrichtung 8 die Positioniereinrichtungen 4 der zugehörigen Gruppe 6 mittels den Aktivier-Schnittstellen 7 deaktiviert, wenn der Abwesenheitszustand erkannt wird. Die jeweilige Triggereinrichtung 8 ist bevorzugt ferner derart ausgestaltet, dass sie die Positioniereinrichtungen 4 der stationären Induktionsladevorrichtungen 2 der zugehörigen Gruppe 6 deaktiviert, wenn das jeweilige, sich innerhalb der Gruppe befindende Kraftfahrzeug 100 im Ladebetrieb ist.

Das Ladesystem 1 kann, wie in Figur 1 angedeutet, in einem Parkplatz 200 zum Einsatz kommen und bildet somit mit dem Parkplatz 200 ein Parkplatz-System 300. Der Parkplatz 200 umfasst dabei mehrere Parkflächen 201, wobei die jeweilige Parkfläche 201 dem Abstellen/Parken eines Kraftfahrzeugs 100 dient. Zumindest ein Teil der Parkflächen 201 ist mit einer zugehörigen stationären Induktionsladevorrichtung 2 des Ladesystems 1 versehen. In dem in Figur 1 gezeigten Beispiel ist rein beispielhaft die jeweilige Parkfläche 201 mit einer stationären Induktionsladevorrichtung 2 des Landessystems 1 versehen. Somit kommt es zu einer analogen Gruppierung der Parkflächen 201. Wie Figur 2 entnommen werden kann, ist im gezeigten Ausführungsbeispiel die stationäre Induktionsladevorrichtung 2 in der zugehörigen Parkfläche 201 eingelassen.

Wie Figur 1 entnommen werden kann, ist in den gezeigten Ausführungsbeispielen zwischen den benachbarten Gruppen 6 jeweils ein von stationären Induktionsladevorrichtungen 2 freier Bereich 16 vorgesehen, welche durch eine Fahrbahn 202 des Parkplatzes 200 gebildet wird. Wie Figur 1 ferner entnommen werden kann, ist im gezeigten Ausführungsbeispiel die jeweilige stationäre Induktionsladevorrichtung 2 einer einzigen der Gruppen 6 zugeordnet. Das heißt, dass die Gruppen 6 sich keine stationäre Induktionsladevorrichtungen 2 teilen.

In den gezeigten Ausführungsbeispielen weist die jeweilige Triggereinrichtung 8 eine drahtlose Schnittstelle 9 auf, welche eine die zugehörige Gruppe 6 umfassende Zone 10 mit einem drahtlosen Netz abdeckt. Die Schnittstelle 9 wird nachfolgend auch als Kommunikationsschnittstelle 9 bezeichnet. In Figur 1 ist dabei lediglich für die vier dargestellten Triggereinrichtungen 8 die jeweils zugehörige Zone 10 gezeigt. Wie Figur 1 entnommen werden kann, ist in dem gezeigten Ausführungsbeispiel die jeweilige Gruppe 6 lediglich in der zugehörigen Zone 10 angeordnet. In den gezeigten Ausführungsbeispielen deckt die jeweilige drahtlosen Kommunikationsschnittstellen 9 die zugehörige Zone 10 mit einem drahtlosen Netz gemäß dem IEEE 802.11-Standard ab. Die drahtlose Kommunikationsschnittstelle 9 ist also insbesondere eine WLAN-Basisstation 11, oder ein WLAN-Accesspoint 12, insbesondere ein WLAN-Router 13. Die jeweilige Triggereinrichtung 8 kommuniziert mittels des drahtlosen Netzes mit Kraftfahrzeugen 100. Zu diesem Zweck kann das jeweilige Kraftfahrzeug 100, wie in Figur 2 angedeutet, eine entsprechende Drahtlos-Schnittstelle 108 aufweisen, welche insbesondere ein drahtloses Signal zur Kommunikation aussendet vorzugsweise zudem empfängt. Die Annäherung eines Kraftfahrzeugs 100 wird erkannt, wenn das Kraftfahrzeug 100 mit der drahtlosen Kommunikationsschnittstelle 9 kommuniziert, also insbesondere in die zugehörige Zone 10 eindringt. Ebenso erkannt werden, dass ein Kraftfahrzeug 100 sich von der zugehörigen Gruppe 6 entfernt, wenn keine Kommunikation mehr mit dem Kraftfahrzeug 100 möglich ist, dass Kraftfahrzeug 100 also die zugehörige Zone 10 verlässt.

Wie in Figur 1 angedeutet ist, ist in den gezeigten Ausführungsbeispielen in der jeweiligen Gruppe 6 das Signal des drahtlosen Netzes der zugehörigen Triggereinrichtung 8 stärker ist als das Signal des drahtlosen Netzes der jeweiligen anderen Triggereinrichtung 8. Das heißt, dass die stationären Induktionsladevorrichtungen 2 der jeweiligen Gruppe 6 derjenigen Triggereinrichtung 8 mit dem lokal stärksten drahtlosen Signal zugeordnet sind. Wie Figur 1 zu entnehmen ist, ist im gezeigten Ausführungsbeispiel die jeweilige Zone 10 zu den anderen Gruppen 6 beabstandet. Das heißt, dass im gezeigten Ausführungsbeispiel die jeweilige Zone 10 sich nicht in andere Gruppen 6 hineinerstreckt. Wie den Figuren 1 und 4 angedeutet, ist in den gezeigten Ausführungsbeispielen die jeweilige drahtlose Kommunikationsschnittstelle 9, insbesondere die jeweilige Triggereinrichtung 8, mittig in der zugehörigen Gruppe 6 angeordnet. Zudem befindet sich die jeweilige Gruppe 6 mittig in der zugehörigen Zone 10.

Wie den Figuren 1 und 4 zu entnehmen ist, ist in den gezeigten Ausführungsbeispielen die jeweilige drahtlose Kommunikationsschnittstelle 9 von den zugehörigen stationären Induktionsladevorrichtung 2 separat und zu diesen beabstandet. Wie in Figur 4 gestrichelt angedeutet, kann zumindest eine der drahtlosen Kommunikationsschnittstelle 9 aber auch in einer der zugehörigen stationären Induktionsladevorrichtungen 2 der zugehörigen Gruppe 6 vorgesehen, also Bestandteil dieser stationären Induktionsladevorrichtung 2, sein. Dabei handelt es sich, wie in Figur 4 ebenfalls angedeutet, um eine der mittig angeordneten stationären Induktionsladevorrichtungen 2 der Gruppe 6.

Wie in Figur 4 angedeutet, kann zumindest eine der Aktivier-Schnittstelle 7, im gezeigten Ausführungsbeispiel die jeweilige Aktivier-Schnittstelle 7, eine drahtlose Schnittstelle 14 sein, sodass die Aktivierung und sodass die Kommunikation mit der zugehörigen Triggereinrichtung 8 drahtlos erfolgt. Im gezeigten Ausführungsbeispiel und bevorzugt ist die als drahtlose Schnittstelle 14 ausgestaltete Aktivier-Schnittstelle 7 mittels des drahtlosen Netzes mit der Triggereinrichtung 7 kommunizierend verbunden.

Wie in Figur 2 stark vereinfacht angedeutet, kann auch zumindest eine der stationären Induktionsladevorrichtung 2 ein BUS-System 15 mit der Aktivier-Schnittstelle 7 aufweisen.

In den gezeigten Ausführungsbeispielen sind die stationären Energiespulen 3 jeweils eine Flachspule 17. Dabei ist die stationäre Energiespule 3, wie beispielsweise Figur 3 entnommen werden kann, um eine parallel zur Höhenrichtung R1 verlaufende Wickelachse A1 gewickelt.

Wie den Figuren 2 und 3 entnommen werden kann, weist die jeweilige Positioniereinrichtung 4 zumindest vier Sendespulen 5 auf, wobei in Figur 2 lediglich zwei der Sendespulen 5 zu sehen sind. Wie lediglich in Figur 3 zu sehen ist, erzeugt eine der Sendespulen 5 ein in Längsrichtung R2 gerichtetes magnetisches Feld. Diese Sendespule 5 wird nachfolgend auch Fernspule 18 bezeichnet. Bevorzugt handelt es sich bei der Längsrichtung R2 um die Fahrtrichtung des Kraftfahrzeugs 100, also um die X-Richtung des Kraftfahrzeugs 100. Die Fernspule 18 ist im gezeigten Ausführungsbeispiel um eine parallel zur Längsrichtung R1 verlaufende Wickelachse A2 gewickelt. Wie insbesondere Figur 3 ferner entnommen werden kann, weist die stationäre Induktionsladevorrichtung 2 in den gezeigten Ausführungsbeispielen zumindest vier zueinander versetzte weitere Sendespulen 5 auf, welche jeweils ein magnetisches Feld erzeugen, das in Höhenrichtung R1 gerichtet ist. Diese Sendespulen 5 werden nachfolgend auch als Nahspulen 19 bezeichnet. Im in Figur 3 gezeigten Ausführungsbeispiel weist die Positioniereinrichtung 4 insgesamt fünf solche Nahspulen 19 auf. Wie insbesondere Figur 3 ferner entnommen werden kann, ist die jeweilige Nahspule 19 als eine Flachspule 17 ausgebildet, welche um eine parallel zur Höhenrichtung R1 verlaufende Wickelachse A3 gewickelt ist. Wie insbesondere Figur 3 entnommen werden kann, sind die Sendespulen 5 von der stationären Energiespule 3 unterschiedlich. Wie Figur 3 ferner entnommen werden kann, sind die Nahspulen 19 kleiner als die stationäre Energiespule 3. Dabei dient das von der Fernspule 18 erzeugte magnetische Feld vorzugsweise der Fernpositionierung, insbesondere für Abstände von mehr als 0,5 m, insbesondere zwischen 1,5 m und 0,5 m. Bevorzugt dient die jeweilige Nahspule 19 der Nahpositionierung, das heißt insbesondere für Abstände von weniger als 1,5 m, insbesondere weniger als 0,5 m.

## Patentansprüche

1. Ladesystem (1),
- mit mehreren zueinander beabstandeten stationären Induktionsladevorrichtungen (2),
- wobei die jeweilige stationäre Induktionsladevorrichtung (2) in einem Ladebetrieb zur drahtlosen Energieübertragung mit einer mobilen Induktionsladevorrichtung (101) eines Kraftfahrzeugs (100) induktiv zusammenwirkt,
- wobei die stationären Induktionsladevorrichtungen (2) in zumindest zwei Gruppen (6) unterteilt sind und die jeweilige Gruppe (6) zumindest zwei stationäre Induktionsladevorrichtungen (2) umfasst,
- wobei die jeweilige stationäre Induktionsladevorrichtung (2) eine Positioniereinrichtung (4) aufweist, welche in einem Positionierbetrieb zum Positionieren einer mobilen Induktionsladevorrichtung (101) eines Kraftfahrzeugs (100) zur stationären Induktionsladevorrichtung (2) ein Positioniersignal erzeugt,
- **dadurch gekennzeichnet,**
- **dass** die jeweilige stationäre Induktionsladevorrichtung (2) eine Aktivier-Schnittstelle (7) aufweist,
- **dass** die jeweilige Gruppe (6) eine zugehörige Triggereinrichtung (8) aufweist, welche mit den Aktivier-Schnittstellen (7) der stationären Induktionsladevorrichtungen (2) der zugehörigen Gruppe (6) kommunizierend verbunden ist,
- **dass** die jeweilige Triggereinrichtung (8) derart ausgestaltet ist, dass sie eine Annäherung eines Kraftfahrzeugs (100) an die zugehörige Gruppe (6) erkennt und bei Erkennung der Annäherung mittels der Aktivier-Schnittstellen (7) die Positioniereinrichtungen (4) zumindest der unbelegten stationären Induktionsladevorrichtungen (2) der zugehörigen Gruppe (6) zumindest teilweise aktiviert.

2. Ladesystem nach Anspruch 1,
**dadurch gekennzeichnet,**
**dass** die jeweilige Triggereinrichtung (8) ferner derart ausgestaltet ist, dass sie einen Abwesenheitszustand der zugehörigen Gruppe (6) erkennt, in welchem sich kein Kraftfahrzeug (100) in der Gruppe (6) befindet oder sich alle in der Gruppe befindenden Kraftfahrzeuge (100) im Ladebetrieb befinden und kein Kraftfahrzeug (100) sich der Gruppe (6) annähert, und die Positioniereinrichtungen (4) der zugehörigen Gruppe (6) mittels den Aktivier-Schnittstellen (7) zumindest teilweise deaktiviert, wenn der Abwesenheitszustand erkannt wird.

3. Ladesystem nach Anspruch 1 oder 2,
**dadurch gekennzeichnet,**
- **dass** zumindest eine der Triggereinrichtungen (8) eine drahtlose Kommunikationsschnittstelle (9) aufweist, welche eine die zugehörige Gruppe (6) umfassende Zone (10) mit einem drahtlosen Netz abdeckt und mittels des Netzes mit Kraftfahrzeugen (100) kommuniziert,
- **dass** eine Annäherung eines Kraftfahrzeugs (100) erkannt wird, wenn das Kraftfahrzeug (100) mittels des Netzes mit der drahtlosen Kommunikationsschnittstelle (9) kommuniziert.

4. Ladesystem nach Anspruch 3,
**dadurch gekennzeichnet,**
**dass** zumindest eine der wenigstens einen drahtlosen Kommunikationsschnittstellen (9) die zugehörige Zone (10) mit einem drahtlosen Netz gemäß dem IEEE 802.11-Standard abdeckt, insbesondere eine WLAN-Basisstation (11) ist.

5. Ladesystem nach Anspruch 3 oder 4,
**dadurch gekennzeichnet,**
- **dass** zumindest zwei Triggereinrichtungen (8) jeweils eine solche drahtlose Kommunikationsschnittstelle (9) aufweisen,
- **dass** in der jeweiligen Gruppe (6) das Signal des drahtlosen Netzes der zugehörigen Triggereinrichtung (8) stärker ist als das Signal des drahtlosen Netzes der jeweiligen anderen Triggereinrichtung (8).

6. Ladesystem nach einem der Ansprüche 3 bis 5,
**dadurch gekennzeichnet,**
**dass** zumindest eine der wenigstens einen drahtlosen Kommunikationsschnittstellen (9) mittig in der zugehörigen Gruppe (6) angeordnet ist.

7. Ladesystem nach einem der Ansprüche 3 bis 6,
**dadurch gekennzeichnet,**
**dass** zumindest eine der wenigstens einen drahtlosen Kommunikationsschnittstellen (9) von den zugehörigen stationären Induktionsladevorrichtung (2) separat, insbesondere zudem zu diesen beabstandet, ist.

8. Ladesystem nach einem der Ansprüche 3 bis 7,
**dadurch gekennzeichnet,**
**dass** zumindest eine der wenigstens einen drahtlosen Kommunikationsschnittstellen (9) in einer der zugehörigen stationären Induktionsladevorrichtung (2) vorgesehen ist.

9. Ladesystem nach einem der Ansprüche 1 bis 8,
**dadurch gekennzeichnet,**
**dass** zumindest eine der Aktivier-Schnittstellen (7) eine drahtlose Schnittstelle (14) ist.

10. Ladesystem nach Anspruch 9 und einem der Ansprüche 3 bis 8,
**dadurch gekennzeichnet,**
**dass** die als drahtlose Schnittstelle (14) ausgestaltete Aktivier-Schnittstelle (7) mittels des drahtlosen Netzes mit der Triggereinrichtung (8) der zugehörigen Gruppe (6) kommunizierend verbunden ist.

11. Ladesystem nach einem der Ansprüche 1 bis 10,
**dadurch gekennzeichnet,**
**dass** zumindest eine der Positioniereinrichtungen (4) im Betrieb zumindest ein magnetisches Positioniersignal erzeugt.

12. Ladesystem nach einem der Ansprüche 1 bis 11,
**dadurch gekennzeichnet,**
**dass** zwischen zumindest zwei benachbarten Gruppen (6) ein von stationären Induktionsladevorrichtungen (2) freier Bereich (16), insbesondere eine Fahrbahn (202), angeordnet ist.

13. Ladesystem nach einem der Ansprüche 1 bis 12,
**dadurch gekennzeichnet,**
**dass** die jeweilige stationäre Induktionsladevorrichtung (2) einer einzigen Gruppe (6) zugeordnet ist.

14. Ladesystem nach einem der Ansprüche 1 bis 13,
**dadurch gekennzeichnet,**
**dass** zumindest eine der stationären Induktionsladevorrichtungen (2) ein BUS-System (15) mit der Aktivier-Schnittstelle (7) aufweist.

15. Parkplatz-System (300) mit einem Parkplatz (1), der mehrere Parkflächen (201) aufweist, und mit einem Ladesystem (1) nach einem der Ansprüche 1 bis 14, wobei die jeweilige stationäre Induktionsladevorrichtung (2) des Ladesystems (1) an einer zugehörigen Parkfläche (201) angeordnet ist.

## Claims

1. A charging system (1),
- having multiple stationary induction charging devices (2) spaced apart from one another,
- each stationary induction charging device (2) interacting inductively with a mobile induction charging device (101) of a motor vehicle (100) for wireless energy transmission during a charging operation,
- the stationary induction charging devices (2) being divided into at least two groups (6), and each group (6) comprising at least two stationary induction charging devices (2),
- each stationary induction charging device (2) having a positioning apparatus (4) which, during a positioning operation, generates a positioning signal for positioning a mobile induction charging device (101) of a motor vehicle (100) relative to the stationary induction charging device (2),
- **characterized in that**
- each stationary induction charging device (2) has an activation interface (7),
- each group (6) has an associated trigger apparatus (8) which is communicatively connected to the activation interfaces (7) of the stationary induction charging devices (2) of the associated group (6),
- each trigger apparatus (8) is designed such that it detects the approach of a motor vehicle (100) to the associated group (6) and, when the approach is detected, at least partially activates the positioning apparatuses (4) of at least the unoccupied stationary induction charging devices (2) of the associated group (6) by means of the activation interfaces (7).

2. The charging system according to claim 1,
**characterized in that**
each trigger apparatus (8) is further designed such that it detects an absence state of the associated group (6), in which there is no motor vehicle (100) in the group (6) or all motor vehicles (100) in the group are in charging operation and no motor vehicle (100) is approaching the group (6), and at least partially deactivates the positioning apparatuses (4) of the associated group (6) by means of the activation interfaces (7) when the absence state is detected.

3. The charging system according to claim 1 or 2,
**characterized in that**
- at least one of the trigger apparatuses (8) has a wireless communication interface (9) which covers a zone (10) comprising the associated group (6) with a wireless network and communicates with motor vehicles (100) by means of the network,
- the approach of a motor vehicle (100) is detected when the motor vehicle (100) communicates with the wireless communication interface (9) by means of the network.

4. The charging system according to claim 3,
**characterized in that**
at least one of the at least one wireless communication interfaces (9) covers the associated zone (10) with a wireless network according to the IEEE 802.11 standard, and in particular is a WLAN base station (11).

5. The charging system according to claim 3 or 4,
**characterized in that**
- at least two trigger apparatuses (8) each have such a wireless communication interface (9),
- in each group (6), the signal of the wireless network of the associated trigger apparatus (8) is stronger than the signal of the wireless network of the other trigger apparatus (8).

6. The charging system according to any of claims 3 to 5,
**characterized in that**
at least one of the at least one wireless communication interfaces (9) is arranged centrally in the associated group (6).

7. The charging system according to any of claims 3 to 6,
**characterized in that**
at least one of the at least one wireless communication interfaces (9) is separate from the associated stationary induction charging device (2), in particular also spaced apart therefrom.

8. The charging system according to any of claims 3 to 7,
**characterized in that**
at least one of the at least one wireless communication interfaces (9) is provided in one of the associated stationary induction charging device (2).

9. The charging system according to any of claims 1 to 8,
**characterized in that**
at least one of the activation interfaces (7) is a wireless interface (14).

10. The charging system according to claim 9 and any of claims 3 to 8,
**characterized in that**
the activation interface (7) designed as a wireless interface (14) is communicatively connected to the trigger apparatus (8) of the associated group (6) by means of the wireless network.

11. The charging system according to any of claims 1 to 10,
**characterized in that**
at least one of the positioning apparatuses (4) generates at least one magnetic positioning signal during operation.

12. The charging system according to any of claims 1 to 11,
**characterized in that**
a region (16) free of stationary induction charging devices (2), in particular a roadway (202), is arranged between at least two adjacent groups (6).

13. The charging system according to any of claims 1 to 12,
**characterized in that**
each stationary induction charging device (2) is assigned to a single group (6).

14. The charging system according to any of claims 1 to 13,
**characterized in that**
at least one of the stationary induction charging devices (2) has a BUS system (15) comprising the activation interface (7).

15. A car park system (300) having a car park (1), which has multiple parking spaces (201), and having a charging system (1) according to any of claims 1 to 14, wherein each stationary induction charging device (2) of the charging system (1) is arranged at an associated parking space (201).

## Revendications

1. Système de charge (1),
- comportant plusieurs dispositifs de charge par induction (2) fixes espacés les uns des autres,
- dans lequel le dispositif de charge par induction (2) fixe respectif coopère par induction avec un dispositif de charge par induction (101) mobile d'un véhicule automobile (100) dans un mode de fonctionnement de charge pour la transmission d'énergie sans fil,
- dans lequel les dispositifs de charge par induction (2) fixes sont divisés en au moins deux groupes (6) et le groupe (6) respectif comprend au moins deux dispositifs de charge par induction (2) fixes,
- dans lequel le dispositif de charge par induction (2) fixe respectif présente un appareil de positionnement (4) qui génère un signal de positionnement dans un mode de fonctionnement de positionnement pour positionner un dispositif de charge par induction (101) mobile d'un véhicule automobile (100) par rapport au dispositif de charge par induction (2) fixe,
- **caractérisé en ce**
- **que** le dispositif de charge par induction (2) fixe respectif présente une interface d'activation (7),
- **que** le groupe (6) respectif présente un appareil de déclenchement (8) associé qui est connecté de manière à communiquer aux interfaces d'activation (7) des dispositifs de charge par induction (2) fixes du groupe (6) associé,
- **que** l'appareil de déclenchement (8) respectif est configuré de telle sorte qu'il détecte une approche d'un véhicule automobile (100) vers le groupe (6) associé et, en cas de détection de l'approche, active au moins partiellement les appareils de positionnement (4), au moins des dispositifs de charge par induction (2) fixes inoccupés du groupe (6) associé, au moyen des interfaces d'activation (7).

2. Système de charge selon la revendication 1,
**caractérisé en ce**
**que l'**appareil de déclenchement (8) respectif est en outre configuré de telle sorte qu'il détecte un état d'absence du groupe (6) associé, dans lequel aucun véhicule automobile (100) ne se trouve dans le groupe (6) ou tous les véhicules automobiles (100) se trouvant dans le groupe sont dans le mode de fonctionnement de charge et aucun véhicule automobile (100) ne s'approche du groupe (6), et désactive au moins partiellement les appareils de positionnement (4) du groupe (6) associé au moyen des interfaces d'activation (7) lorsque l'état d'absence est détecté.

3. Système de charge selon la revendication 1 ou 2,
**caractérisé en ce**
- **qu'**au moins l'un des appareils de déclenchement (8) présente une interface de communication sans fil (9) qui couvre une zone (10) comprenant le groupe (6) associé et comportant un réseau sans fil et communique avec des véhicules automobiles (100) au moyen du réseau,
- **qu'**une approche d'un véhicule automobile (100) est détectée lorsque le véhicule automobile (100) communique avec l'interface de communication sans fil (9) au moyen du réseau.

4. Système de charge selon la revendication 3,
**caractérisé en ce**
**qu'**au moins l'une des au moins une interfaces de communication sans fil (9) couvre la zone (10) associée comportant un réseau sans fil conformément à la norme IEEE 802.11, en particulier est une station de base WLAN (11).

5. Système de charge selon la revendication 3 ou 4,
**caractérisé en ce**
- **qu'**au moins deux appareils de déclenchement (8) présentent respectivement une telle interface de communication sans fil (9),
- **que**, dans le groupe (6) respectif, le signal du réseau sans fil de l'appareil de déclenchement (8) associé est plus fort que le signal du réseau sans fil de l'autre appareil de déclenchement (8) respectif.

6. Système de charge selon l'une des revendications 3 à 5,
**caractérisé en ce**
**qu'**au moins l'une des au moins une interfaces de communication sans fil (9) est disposée au centre du groupe (6) associé.

7. Système de charge selon l'une des revendications 3 à 6,
**caractérisé en ce**
**qu'**au moins l'une des au moins une interfaces de communication sans fil (9) est disposée de manière à être séparée du dispositif de charge par induction (2) fixe associé, en particulier en outre à être espacée de celui-ci.

8. Système de charge selon l'une des revendications 3 à 7,
**caractérisé en ce**
**qu'**au moins l'une des au moins une interfaces de communication sans fil (9) est prévue dans l'un des dispositifs de charge par induction (2) fixes associés.

9. Système de charge selon l'une des revendications 1 à 8,
**caractérisé en ce**
**qu'**au moins l'une des interfaces d'activation (7) est une interface sans fil (14).

10. Système de charge selon la revendication 9 et l'une des revendications 3 à 8,
**caractérisé en ce**
**que** l'interface d'activation (7) conçue comme interface sans fil (14) est connectée de manière à communiquer à l'appareil de déclenchement (8) du groupe (6) associé au moyen du réseau sans fil.

11. Système de charge selon l'une des revendications 1 à 10,
**caractérisé en ce**
**qu'**au moins l'un des appareils de positionnement (4) génère lors du fonctionnement au moins un signal de positionnement magnétique.

12. Système de charge selon l'une des revendications 1 à 11,
**caractérisé en ce**
**qu'**entre au moins deux groupes (6) voisins est disposée une zone (16) exempte de dispositifs de charge par induction (2) fixes, en particulier une voie de circulation (202).

13. Système de charge selon l'une des revendications 1 à 12,
**caractérisé en ce**
**que** le dispositif de charge par induction (2) fixe respectif est associé à un seul groupe (6).

14. Système de charge selon l'une des revendications 1 à 13,
**caractérisé en ce**
**qu'**au moins l'un des dispositifs de charge par induction (2) fixes présente un système de BUS (15) avec l'interface d'activation (7).

15. Système de stationnement (300) comportant un parc de stationnement (1) qui présente plusieurs surfaces de stationnement (201), et comportant un système de charge (1) selon l'une des revendications 1 à 14, dans lequel le dispositif de charge par induction (2) fixe respectif du système de charge (1) est disposé sur une surface de stationnement (201) associée.
